# EUROPÄISCHE PATENTSCHRIFT

(11) **EP 1 040 036 B1**
(45) Veröffentlichungstag und Bekanntmachung des Hinweises auf die Patenterteilung: **24.09.2003**
(21) Anmeldenummer: 98965614.5
(22) Anmeldetag: 15.12.1998
(51) Int. Cl.: B60T 8/44, B60T 8/48, B60T 13/52

(54) **BREMSDRUCK-STEUEREINRICHTUNG, INSBESONDERE FÜR EIN STRASSENFAHRZEUG**
BRAKE PRESSURE CONTROL DEVICE, ESPECIALLY FOR A ROAD VEHICLE
DISPOSITIF DE REGULATION DE PRESSION DE FREINAGE, NOTAMMENT POUR UN VEHICULE ROUTIER

(30) Priorität: 17.12.1997 DE 19756080
(43) Veröffentlichungstag der Anmeldung: 04.10.2000
(73) Patentinhaber: ROBERT BOSCH GMBH, 70442 Stuttgart (DE)
(72) Erfinder: PÜSCHEL, Helmut, D-71672 Marbach (DE); KELLER, Herbert, D-75446 Wiernsheim (DE)
(86) Internationale Anmeldenummer: DE9803681
(87) Internationale Veröffentlichungsnummer: WO99030944

(56) Entgegenhaltungen:
- EP-A- 0 436 926
- EP-A- 0 754 607
- EP-A- 0 800 975
- DE-A- 19 501 760
- GB-A- 2 281 364

## Beschreibung

### Stand der Technik

Die vorliegende Erfindung betrifft eine Bremsdruck-Steuereinrichtung, insbesondere für ein Straßenfahrzeug, gemäß dem Oberbegriff des Hauptanspruchs. Eine solche Bremsdruck-Steuereinrichtung ist beispielsweise aus der britischen Patentanmeldung GB 2 281 364 A bekannt. In dieser Schrift wird eine Bremsdruck-Steuereinrichtung für eine hydraulische Zweikreis-Bremsanlage mit einem pneumatischen Bremskraftverstärker beschrieben. Für jeden Bremskreis ist eine Anordnung von Ventilen sowie eine Rückförderpumpe vorgesehen. Desweiteren ist eine elektronische Steuereinheit vorhanden, die aus einer Verarbeitung von Sensorsignalen, welche die Information über die Art der Betätigung des Bremspedals beinhalten, Signale zur Ansteuerung von Umschaltventilen, Vorlade-Steuerventilen, Ein- und Auslaßventilen sowie der Rückförderpumpen erzeugt. Ein in dieser Schrift offenbarter pneumatischer Bremskraftverstärker umfaßt zwei, durch ein Ventil voneinander trennbare Kammern, von denen eine als Niederdruckkammer und die andere als Arbeits- oder Antriebskammer betrieben werden. Gemäß dieser Schrift ist weiterhin ein Aussteuerventil vorgesehen, mit dem die Arbeitskammer des Bremskraftverstärkers belüftbar ist. Ziel der in dieser Schrift beschriebenen Bremsdruck-Steuereinrichtung ist es, auch bei einer selbsttätig gesteuerten Vollbremsung höchstmögliche Werte für die Fahrzeugverzögerung zu gewährleisten. Eine derartige selbsttätig gesteuerte Vollbremsung ist mittlerweile auch unter der Bezeichnung "Bremsassistent" bekannt geworden. Die Erzeugung der für die selbsttätige Vollbremsurg benötigten Bremsdrücke erfolgt unter Zuhilfenahme der Ventilanordnung und der Rückförderpumpen, also durch eine geeignete Ansteuerung der nachfolgend als Hydroaggregat bezeichneten Baueinheit.

Gemäß der weiteren Offenbarung der GB 2 281 364 A erfolgt eine Zielbremsung, das heißt ein Bremsvorgang im normalen, vom Fahrer kontrollierten Verkehrsgeschehen ohne die Unterstützung des Hydroaggregats (vergl. Seite 12, Zeile 34-37). In diesem im normalen Verkehrsgeschehen jedoch überwiegend auftretenden Fall erfolgt die Bremskraftverstärkung demnach allein durch den pneumatischen Bremskraftverstärker. Dieser muß dementsprechend zur Erreichung der maximalen erforderlichen Bremsdrücke ausgelegt sein. Nachteilig bei einem solchen pneumatischen Bremskraftverstärker ist dann vor allem seine Baugröße, die durch die zu erreichenden Bremsdrücke bestimmt ist. Weiterhin nachteilig bei dieser bekannten Anordnung ist, daß die Magnetventile der Ventilanordnung, insbesondere die Umschalt- und die Vorlade-Steuerventile, für die vergleichsweise hohen Hauptzylinderdrücke ausgelegt sein müssen, die mit Hilfe eines solchen pneumatischen Bremskraftverstärkers erzeugbar sind. Bei heutigen Bremskraftverstärkern liegen diese Drücke in der Größenordnung von bis zu 250 bar.

In der DE 195 01 760 A1 sind ein Verfahren und eine Vorrichtung zur Steuerung eines ABS-ASR-Systems beschrieben, mit denen es möglich ist, den Vakuum-Bremskraft-Verstärker ganz oder teilweise durch eine hydraulische Bremskraftverstärkung zu ersetzen. Der dabei beschriebene Aufbau der Bremsanlage entspricht in weiteren Bereichen dem der GB 2 281 364 A. Die hydraulische Bremskraftverstärkung erfolgt durch eine gezielte Ansteuerung der Ventilanordnung und der Rückförderpumpen. Ein vollständiger Ersatz des pneumatischen Bremskraftverstärkers hat jedoch zur Folge, daß bei jedem Bremsvorgang, bei dem in den Radzylindern ein erhöhter oder verstärkter Bremsdruck erzeugt werden soll, die Rückförderpumpen der Bremsanlage in Betrieb genommen werden müssen. Dies hat den Nachteil, daß der Rückförderbetrieb zu Pedalpulsationen führt, die insbesondere bei niedrigen Pedalkräften als störend empfunden werden. Zusätzlich entstehen Geräusche durch den Pumpenbetrieb, die den Fahrkomfort beinträchtigen. Während der Komfort in einer Notfallsituation, wie sie bei einer Vollbremsung wohl anzunehmen ist, nur eine untergeordnete Rolle spielt, wird eine Komforteinbuße im normalen Fahrbetrieb kaum akzeptiert. Als weiteren Punkt bietet eine ausschließlich auf hydraulischer Bremskraftverstärkung basierende Bremsanlage weniger Redundanz bei einem Ausfall oder einem Fehler im Hydroaggregat.

Zwar ist in der DE 195 01 760 A1 auch die Möglichkeit angedeutet, den Vakuum-Bremskraft-Verstärker nur teilweise durch eine hydraulische Bremskraftverstärkung zu ersetzen, eine konkrete Ausgestaltung dieses Gedankens ist in dieser Schrift jedoch nicht offenbart. Der Verlauf der Entwicklung hat nun gezeigt, daß bisher verwendete pneumatische Bremskraftverstärker für eine optimale Auslegung einer kombinierten pneumatischen und hydraulischen Bremsanlage weniger gut geeignet sind.

### Aufgabe, Lösung und Vorteile der Erfindung

Das der Erfindung zugrunde liegende Problem besteht darin, die bereits erreichte hohe Leistungsfähigkeit, insbesondere die erreichbaren hohen Radbremszylinderdrücke, bekannter Bremsanlagen mit den entgegengesetzten Anforderungen nach Komfort (keine Pedalpulsationen, möglichst keine störenden Geräusche) und außerdem nach möglichst geringem Bauraum zu verbinden. Aufgabe der vorliegenden Erfindung ist es daher, eine Bremsdruck-Steuereinrichtung der eingangs genannten Art anzugeben, die hinsichtlich dieser gegensätzlichen Anforderungen optimiert ist. Diese Aufgabe wird durch eine Bremsdruck-Steuereinrichtung mit den kennzeichnenden Merkmalen des Hauptanspruchs gelöst. Vorteilhafte Ausgestaltungen der Erfindung sind in den untergeordneten Ansprüchen beschrieben.

Hinsichtlich der Auslegung der Bremsdruck-Steuereinrichtung wird vorteilhafterweise in einem Bereich, in dem nur vergleichsweise gemäßigte Bremsdrücke in den Radbremszylindern benötigt werden, nur der pneumatische Bremskraftverstärker betrieben. Bei Erreichen seines Aussteuerpunktes, das heißt wenn die Bremsdruckunterstützung mit Hilfe des pneumatischen Bremskraftverstärkers nicht weiter gesteigert werden kann, wird eine weitere Bremskraftverstärkung mit Hilfe des Hydroaggregats erzeugt. Wesentlich im Unterschied zur Funktion des "Bremsassistenten" ist dabei, daß über einen weiten Betriebsbereich der Bremsanlage hinweg, das heißt für möglichst alle Pedalstellungen des Bremspedals und damit für möglichst alle durch einen Fahrer des Fahrzeugs vorgegebene Steuerdrücke eine weitgehend proportionale Abhängigkeit zwischen den Steuerdrücken und den Bremsdrücken in den Radbremszylindern vorliegt. Diese geforderte Abhängigkeit ist im Hinblick auf eine gute Dosierbarkeit der Bremskraft durch den Fahrer notwendig.

Dabei ist zu beachten, daß der Wunsch nach Dosierbarkeit der Bremskraft eine eher flache Kennlinie erforderlich macht, wohingegen eine hohe Bremskraftverstärkung einer steilen Kennlinie bedarf. Auch in dieser Hinsicht sind also unterschiedliche, gegensätzliche Anforderungen bei der Auslegung der Bremsdruck-Steuereinrichtung zu berücksichtigen.

Eine besondere Schwierigkeit bei der Kombination einer pneumatischen Bremskraftverstärkung mit einer hydraulischen Bremskraftverstärkung für Bremsvorgänge im normalen Fahrgeschehen, das heißt also für Zielbremsungen, liegt darin, einen definierten und für den Fahrer eines Fahrzeugs möglichst nicht spürbaren Übergang zwischen der pneumatischen und der hydraulischen Bremskraftverstärkung zu erreichen. Gleichzeitig soll die Kennlinie des gesamten Bremssystems über alle geforderten Bremsdrücke hinweg alle bestehenden Komfort- und Sicherheitsanforderungen erfüllen. Dementsprechend liegen besonders vorteilhafte Ausgestaltungen der Erfindung darin, bei einer Bremsdruck-Steuereinrichtung der genannten Art Mittel vorzusehen, mit welchen ein Erreichen des Aussteuerpunktes des pneumatischen Bremskraftverstärkers definiert feststellbar und auswertbar ist.

Vorteil der erfindungsgemäßen Bremsdruck-Steuereinrichtung ist, daß ein erfindungsgemäßer pneumatischer Bremskraftverstärker weniger Bauraum benötigt als bisher verwendete pneumatische Tandem-Vakuumbremskraftverstärker, zumindest wenn sie eine ähnliche Verstärkung bieten wie die nun vorgeschlagene Bremsdruck-Steuereinrichtung. Gleichzeitig sind durch den kombinierten Einsatz mit einer hydraulischen Bremskraftverstärkung sogar noch höhere Bremsdrücke in den Radbremszylindern erzeugbar. Gegenüber einfachen, kleineren Vakuumboostern bietet der erfindungsgemäße pneumatische Bremskraftverstärker eine höhere Verstärkung aufgrund seiner steiler ausgelegten Kennlinie im Betriebsbereich bis zum Aussteuerpunkt.

Ein weiterer Vorteil der Erfindung liegt darin, daß sowohl bei einem Vakuumausfall als auch bei einem Fading die Bremsanlage insgesamt voll funktionsfähig bleibt, da in diesem Fall die hydraulische Bremskraftverstärkung die gesamte Bremskraftverstärkung übernehmen kann. Die damit verbundenen Komforteinbußen sind, da es sich dann ja um einen Ausnahmefall handelt, hinnehmbar. Ebenso kann beispielsweise bei fallendem Atmosphärendruck (Bergfahrt in 3000 m Höhe) die geringere Leistung des pneumatischen Bremskraftverstärkers durch die hydraulische Bremskraftverstärkung kompensiert werden. Auch dies erfolgt jedoch nur bedarfsweise und ist im Alltagsbetrieb in der Regel nicht erforderlich.

Ein weiterer Vorteil der Erfindung liegt darin, daß aufgrund der nur geringen Baugröße des erfindungsgemäßen pneumatischen Bremskraftverstärkers nur vergleichsweise geringe Drücke im Hauptzylinder der Bremsanlage erzeugbar sind (bis max. 150 bar gegenüber bis zu 250 bar bisher). Dementsprechend müssen auch die Magnetventile des Hydroaggregats nur für diese entsprechend niedrigeren Drücke ausgelegt sein. Dies vermindert den Aufwand bei der Auslegung und Herstellung der Ventile.

Gegenüber einer rein hydraulischen Bremsanlage besitzt die erfindungsgemäße Bremsdruck-Steuereinrichtung einen erhöhten Komfort, da die Rückförderpumpen zur Erzeugung des Bremsdrucks nur bei starken Bremsungen in Betrieb genommen werden müssen. Im typischen Bremsdruckbereich entspricht das Verhalten der erfindungsgemäßen Bremsdruck-Steuereinrichtung dem einer Anlage mit einem reinen Vakuumverstärker und erreicht somit ohne Pedalpulsationen einen guten Pedalkomfort und eine gute Dosierbarkeit. Dabei kann das Hydroaggregat mit geringerem Aufwand und damit kostengünstiger hergestellt werden, da seine Auswirkung auf den Pedalkomfort nicht mehr im Vordergrund steht.

Desweiteren ist durch die erfindungsgemäße Weiterbildung gemäß den untergeordneten Ansprüchen ein definiertes Einsetzen der hydraulischen Bremskraftunterstützung gewährleistet. Gegenüber der Verwendung eines herkömmlichen, kleinen Vakuumboosters besitzt die erfindungsgemäße Bremsdruck-Steuereinrichtung den Vorteil, daß auch bei niedrigen Bremsdrücken, wie sie für eine Zielbremsung benötigt werden, bereits eine hohe Bremskraftverstärkung gegeben ist.

### Beschreibung von Ausführungsbeispielen

Nachfolgend werden Ausführungsbeispiele der Erfindung anhand einer Zeichnung erläutert. Es zeigen
Figur 1 ein schematisches Schaltbild einer in dieser Form bekannten Bremsanlage, von der die vorliegende Erfindung ausgeht,
Figur 2 eine Prinzipdarstellung einer Steuereinheit,
Figur 3a und b jeweils einen pneumatischen Bremskraftverstärker mit erfindungsgemäßen Mitteln zur Feststellung des Aussteuerpunktes,
Figur 4 Kennlinien verschiedener pneumatischer Bremskraftverstärker zur Erläuterung des Erfindungsgedankens und
Figur 5 beispielhaft eine Kennlinie einer erfindungsgemäßen Bremsdruck-Steuereinrichtung.

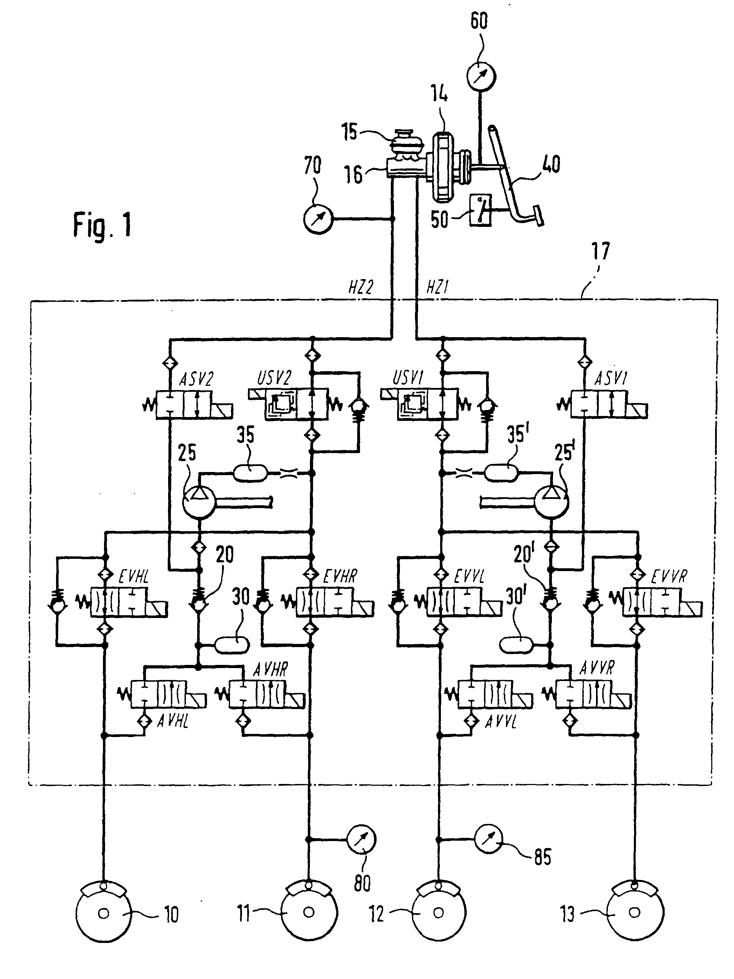

Figur 1 zeigt eine aus der DE 195 01 760 A1 bekannte schematische Darstellung einer Bremsdruck-Steuereinrichtung, von der die Erfindung ausgeht. Mit 10, 11, 12 und 13 sind Radbremszylinder jeweils eines Rades eines Kraftfahrzeugs bezeichnet. Die Radbremszylinder 10 und 11 gehören zu einem ersten und die Radbremszylinder 12 und 13 zu einem zweiten Bremskreis. Mit 40 ist ein Bremspedal bezeichnet, über das in Verbindung mit einem pneumatischen Bremskraftverstärker 14 in bekannter Weise Druck in einem Hauptbremszylinder 16 erzeugbar ist. Der Hauptbremszylinder 16 ist in bekannter Weise mit einem Bremsflüssigkeitsbehälter 15 verbunden. Zwischen den Hauptbremszylinder 16 und die Radbremszylinder 10 bis 13 ist ein Hydroaggregat 17 geschaltet, das eine Anordnung von Ventilen sowie in diesem Fall zwei Rückförderpumpen 25, 25' umfaßt. Die Anordnung von Ventilen umfaßt in bekannter Weise für jeden Bremskreis ein Umschaltventil USV1, USV2, ein Vorlade- oder Ansaugventil ASV1, ASV2 sowie für jeden Radbremszylinder ein Einlaßventil EV und ein Auslaßventil AV. Die Bezeichnungen HL, HR, VL und VR in Verbindung mit den Einlaß- und Auslaßventilen EV und AV geben die hier beispielhaft angenommene Position des jeweiligen Radbremszylinders an dem Kraftfahrzeug an. So bedeuten HL hinten links, VL vorne links, HR hinten rechts und VR vorne rechts. Weiterhin umfaßt das Hydroaggregat 17 Speichereinrichtungen 30, 30', 35, 35', die in bekannter Weise zur Aufnahme von Bremsflüssigkeit dienen. Desweiteren sind in ebenfalls bekannter Weise mehrere Rückschlagventile wie beispielsweise die Ventile 20, 20' vorgesehen. Die Funktionsweise des so beschriebenen Hydroaggregats 17 ist aus der DE 195 01 760 A1 bekannt, so daß auf eine ausführliche Erläuterung hier verzichtet werden soll. Zusammenfassend sei gesagt, daß durch geeignete Ansteuerung der Umschaltventile USV1, USV2, der Ansaug- oder Vorladeventile ASV1, ASV2 sowie der Rückförderpumpen 25, 25' und der Einund Auslaßventile sowohl ein Druckaufbau, als auch ein Druckabbau, als auch ein Zustand des Druckhaltens in den Radbremszylindern 10 bis 13 erzeugbar ist. Dabei kann mit Hilfe der Pumpen 25, 25' in den Radbremszylindern 10 bis 10 ein höherer Druck erzeugt werden als im Hauptbremszylinder 16 vorhanden ist. Mit 60 ist ein Sensor bezeichnet, der eine Information über die Pedalstellung des Bremspedals 40 erzeugt. Mit 70 ist ein Sensor bezeichnet, mit dem eine Information bezüglich des Bremsdrucks P_{HZ} im Hauptzylinder 16 erzeugbar ist. Mit 80 und 85 sind Sensoren bezeichnet, mit denen Informationen über die Bremsdrücke in den Radbremszylindern 11 und 12 erzeugbar sind. Diese Informationen werden in unterschiedlicher Kombination beispielsweise zur Realisierung einer "Bremsassistenten" -Funktion oder einer ABS-Funktion verwendet. Mit 50 ist desweiteren ein Bremslichtschalter bezeichnet.

Die hier beschriebene Bremsdruck-Steuereinrichtung ist in dieser schematischen Darstellung aus der bereits genannten DE 195 01 760 A1 bekannt. Der erfindungsgemäße Unterschied gemäß dem Hauptanspruch besteht in der Auslegung des pneumatischen Bremskraftverstärkers 14, die anhand der nachfolgenden Figuren beschrieben wird.

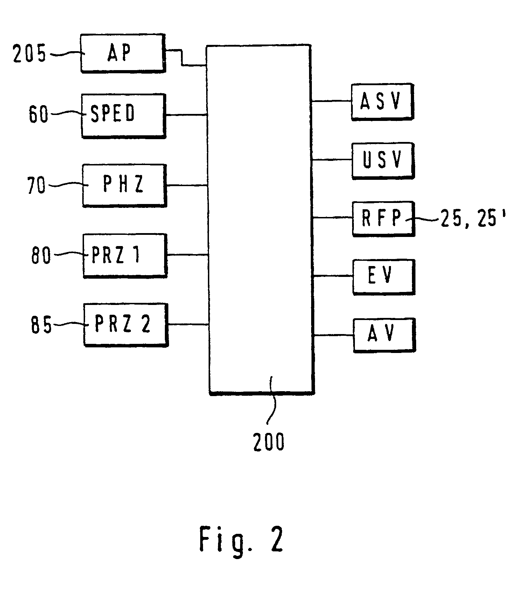

Figur 2 zeigt eine schematische Darstellung einer Steuereinheit 200 zur Ansteuerung der Ventile und der Rückförderpumpen 25, 25' des Hydroaggregats 17. Eingangsseitig sind der Steuereinheit 200 die Signale der Sensoren 60, 70, 80 und 85 zugeführt. Weiterhin erhält die Steuereinheit 200 erfindungsgemäß ein Kennzeichen AP, welches das Erreichen des Aussteuerpunktes des pneumatischen Bremskraftverstärkers 14 während eines Bremsvorganges anzeigt. Das Kennzeichen AP, dessen Erzeugung nachfolgend beschrieben ist, kann beispielsweise ein logischen Signal oder auch ein Flag in einem Register der Steuereinheit 200 sein. Alternativ können die nachfolgend erläuterten Mittel 205 zur Erzeugung des Kennzeichens AP auch in der Steuereinheit 200 selbst untergebracht sein, so daß ihr dann von außen nicht das Kennzeichen AP, sondern die zu seiner Bestimmung benötigten Signale zugeführt sind.

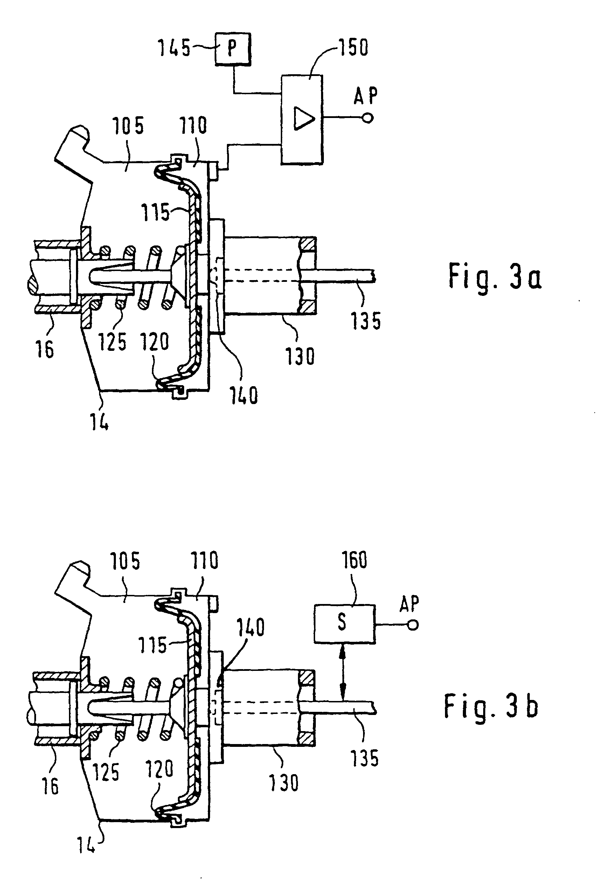

Figur 3a und b zeigen einen an sich bekannten pneumatischen Bremskraftverstärker 14. Er umfaßt wenigstens zwei durch ein nicht dargestelltes Ventil voneinander getrennte Kammern 105 und 110, von denen in diesem Beispiel die Kammer 105 als Niederdruckkammer und die Kammer 110 als Arbeitskammer dient. Die beiden Kammern 105 und 110 sind durch einen beweglich gelagerten Arbeitskolben 115 in Verbindung mit einer Rollmembran 120 getrennt. Mit 125 ist eine Feder bezeichnet. Mit 135 ist eine Kolbenstange bezeichnet, die innerhalb eines Steuergehäuses 130 mit einem Ventil 140 verbunden ist. Auf ihrer dem Arbeitskolben 115 abgewandten Seite ist die Kolbenstange 135 mit dem hier nicht dargestellten Bremspedal 40 verbunden. Das Ventil 140 dient in bekannter Weise zur Belüftung der Arbeitskammer 110 des pneumatischen Bremskraftverstärkers 14.

Gemäß einem ersten Ausführungsbeispiel ist in Figur 3a die Arbeitskammer 110 mit einem Mittel 150 zur Bestimmung eines Differenzdrucks verbunden. Mit 145 ist ein Sensor zur Bestimmung des Umgebungsdrucks bezeichnet. Das Mittel 150 bestimmt den Differenzdruck zwischen dem Umgebungsdruck und dem Druck in der Arbeitskammer 110. Bei Unterschreiten eines vorgegebenen Schwellwertes wird das Kennzeichen AP erzeugt. Das Auftreten des Kennzeichens AP signalisiert dann, daß der Druck in der Arbeitskammer 110 des Bremskraftverstärkers 14 im Rahmen des angenommenen Schwellwertes dem Umgebungsdruck entspricht. Dies signalisiert das Erreichen des Aussteuerpunktes des Bremskraftverstärkers.

Figur 3b zeigt eine alternative Ausgestaltung zur Bestimmung des Aussteuerpunktes des Bremskraftverstärkers, bei der mittels eines Sensors 160 der Bewegungsweg der Kolbenstange 135 bestimmt wird. Da über die Kolbenstange 130 das Ventil 140 geöffnet bzw. geschlossen wird, läßt sich aus der Position der Kolbenstange 135 eine Information über den Öffnungsgrad oder den Ventilhub des Ventils 140 bestimmen. Der Aussteuerpunkt des Bremskraftverstärkers 14 ist dann erreicht, wenn das Ventil 140 maximal geöffnet ist. Neben den hier aufgeführten, bevorzugten Ausführungsbeispielen zur Bestimmung des Erreichens des Aussteuerpunktes können jedoch auch alternative Ausführungsformen im Rahmen der Erfindung Verwendung finden.

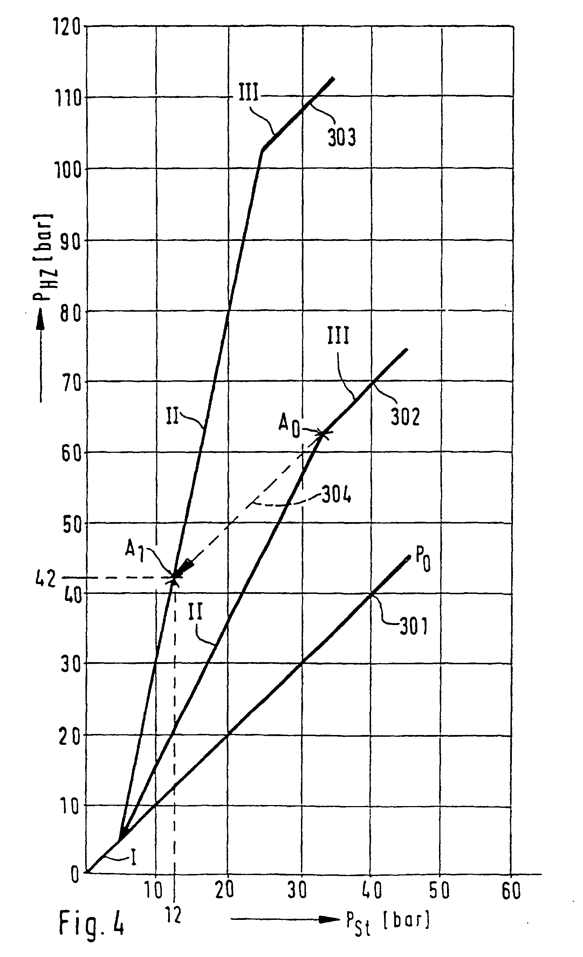

Figur 4 zeigt anhand dreier Kennlinien, wie der Bremskraftverstärker 14 der Erfindung entsprechend ausgelegt ist. Entlang der Abszisse ist ein Steuerdruck P_{St} aufgetragen, der durch die Betätigung des Bremspedals 40 hervorgerufen wird. Entlang der Ordinate ist der Druck im Hauptzylinder 16 der Bremsdruck-Steuereinrichtung aufgetragen. Die Kennlinie 301 zeigt Verhältnisse, bei denen keinerlei Verstärkung durch einen Bremskraftverstärker 14 erfolgt. Dementsprechend ist der Steuerdruck P_{St} über den gesamten Kennlinienbereich identisch mit dem Hauptzylinderdruck P_{HZ}. Demgegenüber zeigen die Kennlinien 302 und 303 Verhältnisse, wie sie sich bei einem funktionierenden Bremskraftverstärker 14 einstellen. Die Kennlinie 302 zeigt den Bremsdruck im Hauptzylinder P_{HZ} bei Verwendung eines einfachen, kleinen Vakuumboosters. Die Kennlinie 303 zeigt die Verhältnisse bei Verwendung eines größeren Tandem-Vakuumverstärkers. Die beiden zuletzt genannten Kennlinien lassen sich in jeweils drei Kennlinienabschnitte I, II und III unterteilen. Im ersten, beiden Kennlinien gemeinsamen Kennlinienabschnitt I findet noch keine pneumatische Bremskraftverstärkung statt. In diesem Kennlinienabschnitt I entsprechen die Kennlinien 302 und 303 der zuvor genannten Kennlinie 301. Ab einer gewissen Schwelle, bei der der Steuerdruck P_{St} erstmals so groß ist, daß das Bremsdrucksteuerventil 140 geöffnet wird, beginnt ein Kennlinienabschnitt II, dessen Steigung im Vergleich zur Kennlinie 301 erhöht ist. Dies bedeutet, daß bei gleichem Steuerdruck P_{St} ein höherer Hauptzylinderdruck P_{HZ} erzeugt wird. Dabei bedeutet eine größere Steigung im Kennlinienabschnitt II eine größere Verstärkungswirkung des Bremskraftverstärkers 14. Wie zu erkennen ist, besitzt ein Tandem-Vakuumverstärker gemäß der Kennlinie 303 eine größere Verstärkung als ein einfacher, kleinerer Vakuumbooster gemäß der Kennlinie 302. Die Verstärkung des Bremskraftverstärkers 14 gemäß den Kennlinien 302 oder 303 nimmt solange zu, bis der Druck in der Arbeitskammer 110 seinen maximalen Wert erreicht hat. Ab diesem Punkt führt eine weitere Erhöhung des Steuerdrucks P_{St} nur noch zu einer linearen Erhöhung des Hauptzylinderdrucks P_{HZ}. Dieser Punkt, an dem die Kennlinie 302 und 303 vom Kennlinienabschnitt II in den Kennlinienabschnitt III übergeht, wird als Aussteuerpunkt bezeichnet. Die Steigung der Kennlinien 302 und 303 in den Kennlinienabschnitten III ist mit der Steigung der Kennlinie 301 identisch.

Die Kennlinie 302 zeigt einen typischen Verlauf und damit eine typische Auslegung eines einfachen Vakuumboosters, wie er heutzutage Verwendung findet. Die mögliche Verstärkung des Boosters ist dabei durch seine Baugröße vorgegeben. Zur Auslegung des Boosters bei gegebener Baugröße sind nun zwei gegensätzliche Forderungen in Einklang zu bringen. Einerseits soll die Verstärkung des Boosters möglichst groß sein, das bedeutet, daß der Kennlinienabschnitt II mit einer möglichst großen Steigung verlaufen soll. Dem steht jedoch die gegensätzliche Anforderung gegenüber, daß der Kennlinienbereich II ein möglichst großes Intervall des Steuerdrucks P_{St} überdecken soll. Diese Anforderung, die zu einer möglichst flachen Auslegung des Kennlinienbereichs II führt, ergibt sich aus einer gewünschten guten Dosierbarkeit der Bremskraft in einem möglichst weiten Bereich des Steuerdrucks P_{St} und damit in einem möglichst weiten Bereich der Bremspedalbetätigung. Wie anhand der Kennlinie 303 zu erkennen, ist eine Verbesserung beider gegensätzlicher Anforderungen nur durch eine Vergrößerung des Bremskraftverstärkers 14 möglich. Wie bereits erwähnt, sind heutige einfache Vakuumbooster üblicherweise gemäß der Kennlinie 302 ausgelegt.

Gemäß der vorliegenden Erfindung wird zur Kombination eines pneumatischen Bremskraftverstärkers 14 mit einer hydraulischen Bremskraftverstärkung mittels eines Hydroaggregats 17 nun vorgeschlagen, den Aussteuerpunkt A₀ eines pneumatischen Bremskraftverstärkers 14, der als einfacher Vakuumbooster vorgesehen ist, zu wesentlich niedrigeren Hauptzylinder- bzw. Steuerdrücken zu verschieben. Dies ist in Figur 4 durch die gestrichelte Linie 304 und den eingezeichneten Aussteuerpunkt A₁ angedeutet. Praktisch bedeutet dies, daß der erfindungsgemäße Bremskraftverstärker 14 bei unveränderter Baugröße derart ausgelegt ist, daß die Steigung des Kennlinienabschnitts II und damit seine Verstärkung bei niedrigen Steuerdrücken P_{St} der Verstärkung eines wesentlich größeren Tandem-Vakuumbremskraftverstärkers entspricht. Bei den hier beispielhaft dargestellten Verhältnissen bedeutet dies, daß bis zu einem Steuerdruck P_{St} von ca. 12 bar und damit einem Hauptzylinderdruck P_{HZ} von ca. 42 bar eine Bremskraftverstärkung über einen in seiner Baugröße vorgegebenen, einfachen Vakuumbooster erfolgt. Wird jedoch für ein Fahrzeug in einer bestimmten Bremssituation ein Bremsdruck im Radbremszylinder von beispielsweise 100 bar benötigt, erfolgt die weitere Verstärkung oberhalb des erfindungsgemäß dimensionierten Aussteuerpunktes A₁ mit Hilfe des Hydroaggregats 17. Die hydraulische Verstärkung ist dabei vorteilhafterweise so ausgelegt, daß die Gesamtverstärkung oberhalb des Aussteuerpunktes A₁ der Verstärkung des größeren Tandem-Vakuum-Verstärkers entspricht oder sogar noch höher ist.

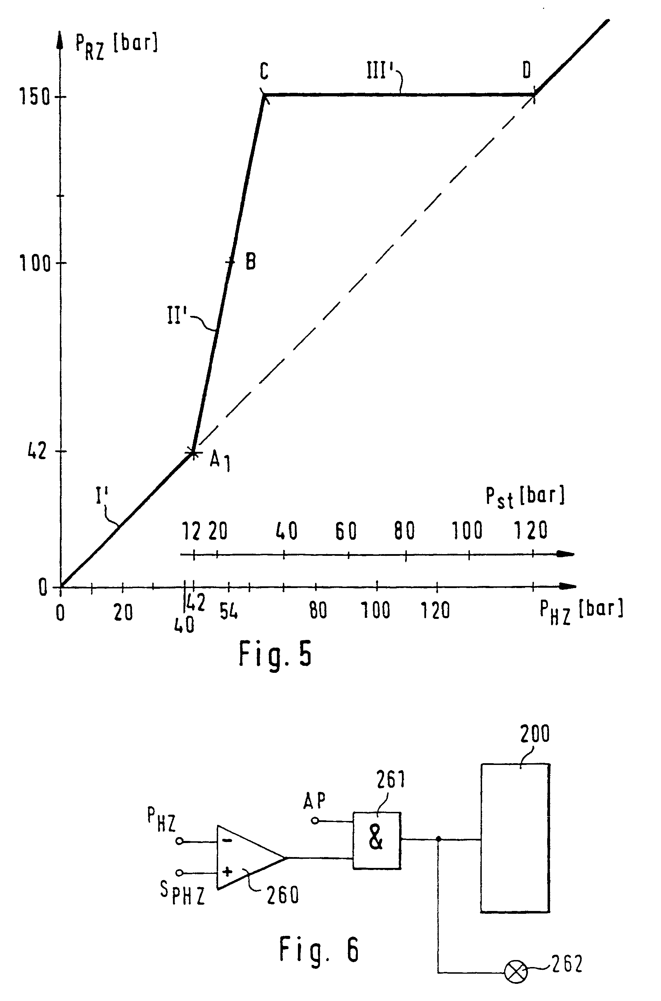

Figur 5 zeigt beispielhaft eine Gesamtkennlinie einer erfindungsgemäßen Bremsdruck-Steuereinrichtung. Entlang der Abszisse ist der Hauptzylinderbremsdruck P_{HZ} in bar aufgetragen. Parallel dazu ist in etwa maßstabsgerechter Verschiebung auch eine Skala für den Steuerdruck P_{St} aufgetragen. Entlang der Ordinate ist der Druck im Radbremszylinder P_{RZ} ebenfalls in bar aufgetragen. Im ersten Kennlinienbereich I' bis zu einem Hauptzylinderdruck von 42 bar erfolgt die Bremskraftverstärkung allein anhand des erfindungsgemäß ausgelegten, einfachen Vakuumboosters mit dem Aussteuerpunkt A₁. In diesem Bereich findet keine hydraulische Bremskraftverstärkung statt, so daß der Druck P_{HZ} im Hauptzylinder dem Druck P_{RZ} im Radbremszylinder entspricht. Gegenüber dem Steuerdruck P_{St} ist der Druck im Radbremszylinder P_{RZ} jedoch gemäß dem Kennlinienabschnitt II der Kennlinie 302 unter Zugrundelegung des Aussteuerpunktes A₁ verstärkt. Ab Erreichen des Aussteuerpunktes A₁, was gemäß dem vorliegenden Beispiel bei einem Hauptzylinderdruck P_{HZ} von 42 bar erfolgt, setzt die hydraulische Bremskraftverstärkung mit Hilfe des Hydroaggregats 17 ein. Diese ist mit Komforteinbußen aufgrund der Inbetriebnahme der Pumpen 25, 25' verbunden, was jedoch angesichts der Tatsache, daß das Überschreiten des Aussteuerpunktes nur bei einer starken Bremsung erfolgt, tolerierbar ist. Gemäß dem hier dargestellten Ausführungsbeispiel endet die hydraulische Bremskraftverstärkung bei einem Druck im Radbremszylinder P_{RZ} von 150 bar. Dies zeigt der Kennlinienabschnitt III', in dem der Druck P_{RZ} konstant bleibt, auch wenn der Hauptzylinderdruck P_{HZ} bzw. der Steuerdruck P_{St} erhöht wird. Erst bei einem Steuerdruck oberhalb von 120 bar erfolgt eine weitere Zunahme des Drucks P_{RZ} im Radbremszylinder, die dann jedoch direkt und unverstärkt der Erhöhung des Steuerdruckes P_{St} entspricht. Dieser Punkt, in der Kennlinie gemäß Figur 5 mit D bezeichnet, wird jedoch in der Realität wohl nicht erreicht, da entsprechend hohe Kräfte zur Betätigung des Bremspedals 40 notwendig wären. Das Erreichen des Aussteuerpunktes A₁ und damit das Einsetzen der hydraulischen Bremskraftverstärkung im Kennlinienabschnitt II' wird vorteilhafterweise mittels einer geeigneten Sensorik, wie sie beispielhaft in den Figuren 3a und 3b gezeigt ist, erfaßt.

Eine Weiterbildung der Erfindung besteht darin, daß das Auftreten des AP-Kennzeichens, daß heißt also das Erreichen des Aussteuerpunktes A₁ des Vakuumbremskraftverstärkers 14 mit dem gleichzeitig dabei vorliegenden Druck P_{HZ} im Hauptzylinder 16 in Beziehung gesetzt ist. Der jeweils aktuelle Druck P_{HZ} im Hauptzylinder 16 kann anhand des Sensors 70 einfach bestimmt werden. Bei einer fehlerfrei funktionierenden Bremsdruck-Steuereinrichtung und bei normalen atmosphärischen Bedingungen müßte der Hauptzylinderdruck P_{HZ} beim Erreichen des Austeuerpunktes A₁ jeweils einen zumindest annähernd gleichen Wert haben. Daraus läßt sich umgekehrt schließen, daß dann, wenn der Hauptzylinderdruck bei Erreichen des Austeuerpunktes A₁ einen von diesem bekannten Wert abweichenden Wert besitzt, ein Fehlerzustand oder zumindest ein vom Normalbetrieb abweichender Zustand vorliegt. Dieser Fall kann beispielsweise dann eintreten, wenn aufgrund eines sehr geringen Atmosphärendrucks aufgrund einer Fahrt im Gebirge die Verstärkung des Vakuumverstärkers geringer ist als üblicherweise. Ebenso kann dieser Fall auftreten, wenn ein Fehler im Bremssystem vorliegt.

Weicht nun der Hauptzylinderdruck P_{HZ} bei Erreichen des Aussteuerpunktes A₁ um mehr als einen gesetzten Schwellenwert von dem zu erwartenden Wert ab, wird anhand der dann bestimmbaren Abweichung die hydraulische Bremskraftverstärkung vorteilhafterweise derart angepaßt, daß der Bremsdruck im Radbremszylinder trotzdem den gewünschten oder benötigten Wert erreicht.

Zur Erfassung eines solchen Fehlerzustandes kann beispielsweise ein Anordnung gemäß Figur 6 Verwendung finden. Darin ist mit 260 ein Komparator bezeichnet, an dessen Eingängen zum einen der aktuell gemessene Hauptzylinderdruck P_{HZ} und zum anderen ein dem Erreichen des Austeuerpunktes A₁ zugeordneter Vergleichswert S_{PHZ} anliegen. Der Komparator ist hier so beschaltet, daß er ein logisches Highsignal erzeugt, wenn der aktuell gemessene Hauptzylinderdruck P_{HZ} unterhalb des Vergleichswertes S_{PHZ} liegt. Das Ausgangssignal des Komparators ist einem Eingang eines logischen UND-Gatters 261 zugeführt. An dessen zweiten Eingang liegt das Kennzeichen AP an. Das UND-Gatter erzeugt dementsprechend an seinem Ausgang ein logisches Highsignal, wenn einerseits das Kennzeichen AP vorliegt und andererseits der aktuelle Hauptzylinderdruck P_{HZ} geringer ist als der Vergleichswert S_{PHZ}. Das Ausgangsignal des UND-Gatters 261 ist vorzugsweise sowohl der Steuereinheit 200 als auch einem Warn- oder Anzeigemittel 262 zugeführt. Über Letzteres ist dem Fahrer des Kraftfahrzeugs die erkannte Abweichung vom Normalzustand anzeigbar.

Mit Hilfe dieser Weiterbildung ist sichergestellt, daß der benötigte Bremsdruck im Radbremszylinder unabhängig von der Höhenlage immer erreichbar ist, da die Abweichungen aufgrund des unterschiedlichen atmosphärischen Drucks mit Hilfe der hydraulischen Bremskraftverstärkung ausgeglichen werden.

## Patentansprüche

1. Bremsdruck-Steuereinrichtung, insbesondere für ein Straßenfahrzeug,
- mit einem pneumatischen Bremskraftverstärker (14), welcher wenigstens zwei voneinander trennbare Kammern (105, 110) umfasst, von denen
- wenigstens eine als Niederdruckkammer (105) und
- wenigstens eine andere als Arbeitskammer (110) betreibbar ist,
- mit einem Hauptzylinder (16),
in dem über den pneumatischen Bremskraftverstärker (14) entsprechend einem vorgebbaren Steuerdruck (P_{St}) ein Hauptzylinderdruck (P_{HZ}) erzeugbar ist und
- mit einem Hydroaggregat (17),
welches zwischen den Hauptzylinder (16) und wenigstens einen Radbremszylinder (10-13) wenigstens eines Rades geschaltet ist,
wobei
- das Hydroaggregat (17) eine Anordnung von schaltbaren Ventilen (ASV, USV, EV, AV) sowie wenigstens eine Pumpe (25, 25') umfasst und
- mit Hilfe des Hydroaggregats in dem wenigstens einen Radbremszylinder (10-13) ein Radbremszylinderdruck (P_{RZ}) erzeugbar ist, welcher höher ist als der Hauptzylinderdruck (P_{HZ}),
wobei
- der pneumatische Bremskraftverstärker einen ersten Aussteuerpunkt (A₀) besitzt und
- bis zum ersten Aussteuerpunkt ein erstes Verhältnis vom Hauptzylinderdruck (P_{HZ}) zum Steuerdruck (P_{St}) vorgegeben ist, und
**dadurch gekennzeichnet, dass**
- der pneumatische Bremskraftverstärker (14) derart ausgelegt wird, dass
- ein zweites Verhältnis vom Hauptzylinderdruck (P_{HZ}) zum Steuerdruck (P_{St}) vorgegeben wird,
- wobei vorgesehen ist, dass mit dem zweiten Verhältnis eine größere pneumatische Bremskraftverstärkung des Hauptzylinderdruck (P_{HZ}) durch den Steuerdruck (P_{St}) erreichbar ist, wie sie ansonsten mit dem ersten Verhältnis erreichbar wäre,
- wobei vorgesehen ist, dass die maximal erreichbare Bremskraftverstärkung des pneumatischen Bremskraftverstärkers mit dem zweiten Verhältnis in einem zweiten Aussteuerpunkt (A₁) erreicht wird,
und
- der zweite Aussteuerpunkt (A₁) bei einem Hauptzylinderdruck (P_{HZ}) von mehr als 0 und weniger als 50 bar erreicht wird,
und
- die Erzeugung eines erhöhten Radbremszylinderdruckes (P_{RZ}) durch eine hydraulische Bremskraftverstärkung mittels des Hydroaggregats im zweiten Aussteuerpunkt (A₁) einsetzt.

2. Bremsdruck-Steuereinrichtung nach Anspruch 1, **dadurch gekennzeichnet, dass** der zweite Aussteuerungspunkt (A₁) bei niedrigeren Hauptzylinderdrücken (P_{HZ}) als beim ersten Aussteuerungspunkt (A₀) erreicht wird.

3. Bremsdruck-Steuereinrichtung nach Anspruch 1, **dadurch gekennzeichnet, dass** vorgesehen ist, die Erhöhung des Radbremszylinderdruckes (P_{RZ}) mittels des Hydroaggregats bis zu einem maximal möglichen Aussteuerungspunkt (C) in Abhängigkeit von einer den Steuerdruck (P_{St}) repräsentierenden Größe zu erhöhen.

4. Bremsdruck-Steuereinrichtung nach Anspruch 1, **dadurch gekennzeichnet, dass** der maximal mögliche Aussteuerungspunkt (C) die Förderhöchstgrenze der im Hydroaggregat vorhandenen Pumpe (25, 25') darstellt.

5. Bremsdruck-Steuereinrichtung nach Anspruch 1, **dadurch gekennzeichnet, dass** der pneumatische Bremskraftverstärker (14) derart ausgelegt ist, dass er seinen Aussteuerpunkt (A0, A1) bereits bei einem Hauptzylinderdruck (P_{HZ}) von etwa 40 bis 45 bar erreicht.

6. Bremsdruck-Steuereinrichtung nach Anspruch 1 oder 5, **dadurch gekennzeichnet, dass** Mittel (145, 150, 160, 205) zur Erzeugung eines Kennzeichens (AP) vorgesehen sind, welches ein Erreichen des Aussteuerpunktes (A₀, A₁) des pneumatischen Bremskraftverstärkers (14) während eines Bremsvorganges anzeigt.

7. Bremsdruck-Steuereinrichtung nach Anspruch 6, **dadurch gekennzeichnet, dass** die genannten Mittel (145,150) einen Differenzdruck zwischen der Arbeitskammer (110) des pneumatischen Bremskraftverstärkers (14) und einem äußeren Umgebungsdruck bestimmen und das Kennzeichen (AP) bei Unterschreiten eines Schwellwertes erzeugen.

8. Bremsdruck-Steuereinrichtung nach Anspruch 6, **dadurch gekennzeichnet, dass** die genannten Mittel (160) einen Öffnungszustand eines Druckregelventils (140) des pneumatischen Bremskraftverstärkers (14) erfassen und das Kennzeichen (AP) bei Überschreiten eines Schwellwertes erzeugen.

9. Bremsdruck-Steuereinrichtung nach einem der Ansprüche 6 bis 8, **dadurch gekennzeichnet, dass** das Kennzeichen (AP) einer Steuereinheit (200) zur Ansteuerung der Anordnung von schaltbaren Ventilen (ASV, USV, EV, AV) zugeführt ist.

10. Bremsdruck-Steuereinrichtung nach Anspruch 9, **dadurch gekennzeichnet, dass** die Steuereinheit (200) die Anordnung von schaltbaren Ventilen (ASV, USV, EV, AV) bei Vorliegen des Kennzeichens (AP) derart ansteuert, dass der Radbremszylinderdruck (P_{RZ}) gegenüber dem Hauptzylinderdruck (P_{HZ}) erhöht ist.

11. Bremsdruck-Steuereinrichtung nach Anspruch 6, **dadurch gekennzeichnet, dass** Mittel (70) vorgesehen sind, mit denen ein aktueller Druck (P_{HZ}) im Hauptzylinder bestimmbar ist, und dass weitere Mittel (260, 261) vorgesehen sind, mit denen überprüfbar ist, ob der aktuelle Druck (P_{HZ}) im Hauptzylinder bei Vorliegen des Kennzeichens (AP) einem zu erwartenden Vergleichswert (S_{PHZ}) in etwa entspricht.

12. Bremsdruck-Steuereinrichtung nach Anspruch 10, **dadurch gekennzeichnet, dass** Signalmittel (262) zur Erzeugung eines Signals vorgesehen sind, wenn der aktuelle Druck (P_{HZ}) im Hauptzylinder bei Vorliegen des Kennzeichens (AP) kleiner als der zu erwartende Vergleichswert (S_{PHZ}) ist.

13. Bremsdruck-Steuereinrichtung nach Anspruch 10, **dadurch gekennzeichnet, dass** ein Ausgangssignal der weiteren Mittel (260, 261) der Steuereinheit (200) zugeführt ist.

## Claims

1. Brake pressure control device, in particular for a road vehicle,
- having a pneumatic brake booster (14) which comprises at least two chambers (105, 110) which can be disconnected from one another,
- at least one of which can be operated as a low pressure chamber (105) and
- at least another of which can be operated as a working chamber (110),
- having a master cylinder (16), in which a master cylinder pressure (P_{HZ}) can be generated by means of the pneumatic brake booster (14) in accordance with a predefinable control pressure (P_{St}), and
- having a hydraulic unit (17),
which is connected between the master cylinder (16) and at least one wheel brake cylinder (10-13) of at least one wheel,
- the hydraulic unit (17) comprising an arrangement of switchable valves (ASV, USV, EV, AV) and at least one pump (25, 25'), and
- it being possible to use the hydraulic unit to generate, in the at least one wheel brake cylinder (10-13), a wheel brake cylinder pressure (P_{RZ}) which is higher than the master cylinder pressure (P_{HZ}),
- the pneumatic brake booster having a first modulation point (A₀), and
- a first ratio of the master cylinder pressure (P_{HZ}) to the control pressure (P_{St}) being predefined up to the first modulation point, and
**characterized in that**
- the pneumatic brake booster (14) is configured in such a way that
- a second ratio of the master cylinder pressure (P_{HZ}) with respect to the control pressure (P_{St}) is predefined,
- there being provision that with the second ratio it is possible to achieve a higher level of pneumatic brake boosting of the master brake cylinder (P_{HZ}) by the control pressure (P_{St}) than would otherwise be achievable with the first ratio,
- there being provision that the maximum achievable level of brake boosting of the pneumatic brake booster is achieved with the second ratio at a second modulation point (A1),
and
- the second modulation point (A₁) is reached at a master cylinder pressure (P_{HZ}) of more than 0 and less than 50 bar,
and
- the generation of an increased wheel brake cylinder pressure (P_{RZ}) by means of hydraulic brake boosting using the hydraulic unit starts at the second modulation point (A₁).

2. Brake pressure control device according to Claim 1, **characterized in that** the second modulation point (A₁) is reached at lower master cylinder pressures (P_{HZ}) than at the first modulation point (A₀).

3. Brake pressure control device according to Claim 1, **characterized in that** there is provision for the increase in the wheel brake cylinder pressure (P_{RZ}) using the hydraulic unit to be increased up to a maximum possible modulation point (C) as a function of a variable which represents the control pressure (P_{St}).

4. Brake pressure control device according to Claim 1, **characterized in that** the maximum possible modulation point (C) constitutes the maximum delivery limit of the pump (25, 25') which is present in the hydraulic unit.

5. Brake pressure control device according to Claim 1, **characterized in that** the pneumatic brake booster (14) is configured in such a way that it already reaches its modulation point (A₀, A₁) at a master cylinder pressure (P_{HZ}) of approximately 40 to 45 bar.

6. Brake pressure control device according to Claim 1 or 5, **characterized in that** means (145, 150, 160, 205) for generating an identifier (AP) are provided, said identifier (AP) indicating when the modulation point (A₀, A₁) of the pneumatic brake booster (14) is reached during a braking process.

7. Brake pressure control device according to Claim 6, **characterized in that** the aforesaid means (145, 150) determine a pressure difference between the working chamber (110) of the pneumatic brake booster (14) and an external ambient pressure and generate the identifier (AP) when said pressure drops below a threshold value.

8. Brake pressure control device according to Claim 6, **characterized in that** the aforesaid means (160) sense an opening state of a pressure regulating valve (140) of the pneumatic brake booster (14) and generate the identifier (AP) when a threshold value is exceeded.

9. Brake pressure control device according to one of Claims 6 to 8, **characterized in that** the identifier (AP) is fed to a control unit (200) for actuating the arrangement of switchable valves (ASV, USV, EV, AV).

10. Brake pressure control device according to Claim 9, **characterized in that**, when the identifier (AP) is present, the control unit (200) actuates the arrangement of switchable valves (ASV, USV, EV, AV) in such a way that the wheel brake cylinder pressure ( P_{RZ}) is increased in comparison with the master cylinder pressure (P_{HZ}).

11. Brake pressure control device according to Claim 6, **characterized in that** means (70) with which a current pressure (P_{HZ}) can be determined in the master cylinder are provided, and **in that** further means (260, 261) are provided with which it is possible to check whether the current pressure (P_{HZ}) in the master cylinder corresponds approximately to a comparison pressure (S_{PHZ}) which is to be expected when the identifier (AP) is present.

12. Brake pressure control device according to Claim 10, **characterized in that** signalling means (262) are provided for generating a signal when the current pressure (P_{HZ}) in the master cylinder is lower than the expected comparison value (S_{PHZ}) when the identifier (AP) is present.

13. Brake pressure control device according to Claim 10, **characterized in that** an output signal of the further means (260, 261) is fed to the control unit (200).

## Revendications

1. Dispositif de régulation de la pression de freinage, notamment pour un véhicule routier, comprenant :
- un servo-frein pneumatique (14) qui comporte au moins deux chambres pouvant être séparées l'une de l'autre (105, 110) dont
- au moins une peut être utilisée comme chambre basse pression (105) et
- au moins une autre peut être utilisée comme chambre de travail (110)
- un maître-cylindre (16)
dans lequel il est possible de générer, via le servo-frein pneumatique (14), une pression du maître-cylindre (P_{HZ}) en fonction d'une pression motrice (P_{St}) appliquée et
- un groupe hydraulique (17) qui est commuté entre le maître-cylindre (16) et au moins un cylindre de frein (10-13) monté sur au moins une roue,
- le groupe hydraulique (17) comprenant une série de soupapes commutables (ASV, USV, EV, AV) ainsi qu'au moins une pompe (25 ; 25') et
- une pression du cylindre de frein monté sur la roue (P_{RZ}) plus élevée que la pression du maître cylindre (P_{HZ}) pouvant être générée à l'aide du groupe hydraulique d'au moins un cylindre du frein monté sur la roue (10-13),
- le servo-frein pneumatique comprenant un premier point de réglage (A₀) et
- un premier rapport de la pression étant appliqué du maître-cylindre (P_{HZ}) à la pression motrice (P_{St}) jusqu'au premier point de réglage
**caractérisé en ce que**
- le servo-frein pneumatique (14) est disposé de manière à ce que
- un deuxième rapport soit appliqué du maître-cylindre (P_{HZ}) à la pression motrice (P_{St})
- tout en prévoyant, dans le deuxième rapport, que le dispositif de freinage pneumatique assisté de la pression du maître-cylindre atteigne un niveau supérieur par le biais de la pression motrice, tout comme il aurait pu l'être dans le premier rapport
- tout en prévoyant, dans le deuxième rapport, que le dispositif de freinage assisté du servo-frein pneumatique atteigne sa capacité maximale au cours d'un deuxième point de réglage (A₁)
et **en ce que**
- le deuxième point de réglage (A₁) est atteint avec une pression du maître-cylindre (P_{HZ}) située entre 0 et de 50 bars.
et **en ce que**
- la pression du cylindre de frein monté sur la roue (P_{RZ}) augmente par le biais du dispositif de freinage hydraulique assisté à l'aide du groupe hydraulique, dans le deuxième point de réglage (A₁).

2. Dispositif de régulation de la pression de freinage selon la revendication 1,
**caractérisé en ce que**
le deuxième point de réglage (A₁) est atteint à des pressions du maître-cylindre (P_{HZ}) plus basses que dans le cas du premier point de réglage (A₀).

3. Dispositif de régulation de la pression de freinage selon la revendication 1,
**caractérisé en ce qu'**
il est prévu d'augmenter la pression du cylindre de frein monté sur la roue (P_{RZ}) à l'aide du groupe hydraulique jusqu'au un point de réglage le plus élevé possible (C) en fonction d'une valeur représentant la pression motrice (P_{St}).

4. Dispositif de régulation de la pression de freinage selon la revendication 1,
**caractérisé en ce que**
le point de réglage le plus élevé possible (C) représente la limite de refoulement de la pompe (25, 25') existant dans le groupe hydraulique.

5. Dispositif de régulation de la pression de freinage selon la revendication 1,
**caractérisé en ce que**
le servo-frein pneumatique (14) est disposé de manière à atteindre son point de réglage (A₀, A₁) dès que la pression du maître-cylindre (P_{HZ}) atteint environ 40 à 45 bars.

6. Dispositif de régulation de la pression de freinage selon la revendication 1 ou 5,
**caractérisé en ce que**
des moyens (145, 150, 160, 205) sont prévus pour former un repère (AP) indiquant si le point de réglage (A₀, A₁) du servo-frein pneumatique (14) est atteint au moment du freinage.

7. Dispositif de régulation de la pression de freinage selon la revendication 6,
**caractérisé en ce que**
lesdits moyens (145, 150) déterminent une pression différentielle entre le chambre de travail (110) du servo-frein pneumatique (14) et une pression ambiante extérieure et forment le repère (AP) en cas de sous-dépassement d'une valeur seuil.

8. Dispositif de régulation de la pression de freinage selon la revendication 6,
**caractérisé en ce que**
lesdits moyens (160) comprennent un état d'ouverture d'un détendeur (140) du servo-frein pneumatique (14) et forment le repère (AP) en cas de dépassement d'une valeur seuil.

9. Dispositif de régulation de la pression de freinage selon les revendications 6 à 8,
**caractérisé en ce que**
le repère (AP) d'une unité de commande (200) est amené pour régler la disposition des soupapes commutables (ASV, USV, EV, AV).

10. Dispositif de régulation de la pression de freinage selon la revendication 9,
**caractérisé en ce que**
l'unité de commande (200) détermine la disposition des soupapes commutables (ASV, USV, EV, AV) en présence du repère (AP), de manière à ce que la pression du cylindre de frein monté sur la roue (P_{RZ}) soit plus élevée que la pression du maître-cylindre (P_{HZ}).

11. Dispositif de régulation de la pression de freinage selon la revendication 6,
**caractérisé en ce que**
des moyens (70) sont prévus pour déterminer une pression effective (P_{HZ}) dans le maître-cylindre et **en ce que** d'autres moyens (260, 261) sont prévus pour vérifier si la pression effective (P_{HZ}) dans le maître-cylindre correspond à une valeur de comparaison (S_{PHZ}) à laquelle on peut s'attendre en présence du repère (AP).

12. Dispositif de régulation de la pression de freinage selon la revendication 10,
**caractérisé en ce que**
des moyens de signalisation (262) sont prévus pour émettre un signal si la pression effective (P_{HZ}) dans le maître-cylindre est inférieure à une valeur de comparaison (S_{PHZ}) à laquelle on peut s'attendre en présence du repère (AP).

13. Dispositif de régulation de la pression de freinage selon la revendication 10,
**caractérisé en ce qu'**
un signal de sortie des autres moyens (260, 261) est amené à l'unité de commande (200).
